# EUROPEAN PATENT APPLICATION

(11) **EP 1 852 685 A2**
(43) Date of publication of application: **07.11.2007**
(21) Application number: 07075282.9
(22) Date of filing: 13.04.2007
(51) Int. Cl.: G01D 11/28

(54) **Method and system for illuminating an indicator**

(30) Priority: 01.05.2006 US 414853
(71) Applicant: Delphi Technologies, Inc., Troy, Michigan 48007 (US)
(72) Inventor: Palacio, Anibal, Cd. Juarez Chihuahua C.D. 32290 (MX)
(74) Representative: Denton, Michael John

(57) **Abstract**

A method and system are provided to illuminate an indicator (208), including indicators for electronic systems, appliances, and motor vehicle settings such as a visible temperature setting. Lighting efficiency is maximized, while light leaks, bright spots, shadows, internal reflections, color bleeds, and other undesirable visual effects are avoided. A lightbox (206B) having a cavity (206A) contains emitted light and transmits the light to an indicator (208). The indicator (208) displays a system setting and an encoder (216) varies the system setting. In an aspect, a light block (302) and ramp (306) are formed in the lightbox (206B) to uniformly dispense light to the indicator (208). A light dividing ridge (308) formed in the lightbox (206B) separates the light dispensed to separate sections (512A, 512B) of the indicator (208). Further improvements include a tight fit formed between the indicator (208) and a control knob (214), and a maximized indicator base (510) area adjacent to the lightbox (206B). The lightbox (206B) can also be integrated as part of a switchpad (600), reducing costs.

## Description

### TECHNICAL FIELD

The invention relates generally to illuminating an indicator, and more particularly to uniformly distributing light to an indicator, and avoiding light leaks, shadows, reflections, color bleeds and other undesirable visual effects.

### BACKGROUND OF THE INVENTION

Illuminated indicators are utilized for a variety of systems ranging from electronic systems, appliances, and system controls visible to an operator of a motor vehicle to decorative graphics. Numerous systems incorporate a lighted halo ring, straight bar or graphics. In regard to system controls visible to an operator of a motor vehicle, halo rings are often used around knobs to provide information to the vehicle operator. When the knob controls the climate of the vehicle passenger compartment, generally the temperature is adjusted by means of a color code. Red characteristically indicates a warmer temperature while blue indicates a cooler temperature. When nighttime brings darkness to the passenger compartment, the indicators are illuminated and serve as a visibility aid to locate the control knob and indicate direction for desired adjustment.

An improved appearance of an illuminated indicator is needed however, since contemporary indicators are often unevenly lit and plagued by light leaks and other undesirable visual effects. One conventional design for illuminating an indicator situated within a motor vehicle utilizes a lightpipe and halo shaped indicator. Light is reflected through the lightpipe material. The lightpipe is attached to a circuit board, an encoder and a faceplate. This lightpipe design includes a number of individual components such that gaps are difficult to control and are therefore created between the components. These gaps cause unwanted visual effects including shadows and light leaks, especially between the indicator and control knob, which is visible to a vehicle operator. Further, during production the inner walls of the lightpipe must be painted white and then black in order to achieve a reflection and reduce light leaks. Still, the lightpipe and the indicator usually experience mixed colors and unwanted visual effects including light leaks, reflections, black rings, and dim lighting.

A second conventional design for illuminating an indicator situated within motor vehicle utilizes a lightpipe, halo shaped indicator and further includes an assembly bezel. The halo ring is positioned between a faceplate and the bezel. The addition of a bezel increases the number of system components and the design cost. While the gaps are less than the previously mentioned lightpipe design, undesirable visual effects are still present. Moreover, the fit of the halo ring to the lightpipe is critical and must be exact or light intended to be transmitted to the halo ring indicator is lost and visible internal reflections and light leaks occur. A third conventional design for illuminating an indicator situated within motor vehicle utilizes a combination of a lightpipe, lightbox and a halo shaped indicator. Here, the control encoder is centered using the faceplate. However, the faceplate centering feature creates a shadow in the halo ring indicator. Further, the centering of the encoder is dependent on the tolerances of the halo, lightpipe and faceplate, which increases centering error. Again, undesirable visual effects are present including uneven lighting, shadows, reflections, light leaks and bleeding indicator colors.

What is needed is a design to illuminate an indicator that effectively eliminates undesirable visual effects including uneven lighting, shadows, internal reflections, light leaks and bleeding colors. A reduced number of components is also needed to control and reduce component gaps, increase part fit tolerance and minimize production and assembly costs.

### SUMMARY OF THE INVENTION

A method and system are provided to illuminate an indicator. The present invention is useful to and can improve a wide range of illuminated indicators including motor vehicle controls visible to an operator, and indicators for other electronic systems and appliances. The indicators may be formed with varied shapes including a lighted ring, or straight bar. Systems having decorative graphics may utilize the present invention as well.

Improved visual appearance of a lighted indicator is provided, which may be especially appreciated when the lighting is apparent such as at night. Light is evenly distributed to an indicator using a minimum number of components. Lighting efficiency is maximized. Light leaks, shadows, internal reflections, color bleeds, and other undesirable visual effects are avoided. Further, the surface of the indicator that receives light is increased as compared to contemporary devices. This further improves light distribution, avoids undesirable visual effects, and allows for an increased fit tolerance between the light source and the indicator.

The present invention also provides a tight tolerance between an indicator and a control knob. Thus, in addition to avoiding leaks and shadows by minimizing gaps, typical secondary operations and components needed to block light leaks, bright spots, and internal reflections are eliminated. Production and assembly costs are reduced as compared to conventional devices since, in an embodiment, part numbers are reduced and the system may be integrated with standard components.

Features of the invention are achieved in part by employing a novel lightbox and indicator. A lightbox having a cavity contains light emitted from a light source such as a light emitting diode. An indicator is positioned adjacent to an outlet in the lightbox and receives light transmitted from the lightbox. The indicator is a translucent material to receive and pass the light therethrough. The indicator displays a system setting for some systems. An encoder, situated adjacent to the indicator, varies the system setting. The system setting may be a setting such as a motor vehicle function setting including a temperature setting, a fan setting or a radio setting.

In an embodiment, a ramp is formed in the lightbox for uniformly dispensing light to the indicator. The ramp substantially extends at an angle from a first end of the lightbox cavity adjacent to the light source to a second end of the lightbox cavity adjacent to the indicator. A light dividing ridge is also optionally formed in the lightbox for separating the light dispensed to separate sections of the indicator. The light dividing ridge is positioned adjacent to the indicator and the second end of the lightbox cavity. The light dividing ridge can be utilized to separate a first color from a second color on an indicator having a color pad display. A light block is further optionally formed in the lightbox for dispersing the light throughout the lightbox cavity and uniformly directing light to the indicator. The light block is positioned adjacent to the light source and the first end of the lightbox cavity.

In an embodiment, the indicator is shaped with a maximized base area adjacent to the lightbox to create a large pad printing area and to increase fit tolerance of the lightbox to the indicator. The indicator can be formed as a color display such that a color represents a particular system setting. The indicator may be shaped in numerous forms including a halo ring or a form having a straight perimeter. Additionally, the indicator can be utilized to align the positioning of the encoder. A knob may be affixed to the encoder to facilitate grasping the encoder. A faceplate can be positioned between the indicator and the knob. Further, the present invention reduces the number of components to illuminate an indicator by, for example, integrating the lightbox as part of a switchpad.

Other features and advantages of this invention will be apparent to a person of skill in the art who studies the invention disclosure. Therefore, the scope of the invention will be better understood by reference to an example of an embodiment, given with respect to the following figures.

### BRIEF DESCRIPTION OF THE DRAWINGS

The foregoing aspects and many of the attendant advantages of this invention will become more readily appreciated by reference to the following detailed description, when taken in conjunction with the accompanying drawings, wherein:
FIG. 1A is a perspective view of a contemporary illuminated indicator, lightpipe and an encoder knob;
FIG. 1B is another perspective view of the lightpipe and encoder knob as in FIG. 1A further showing a sectional view of the lightpipe with the absence of the indicator;
FIG. 2 is a sectional side view illustrating an illuminated indicator, lightbox and encoder, in accordance with an embodiment of the present invention;
FIG. 3 is an exploded perspective view of an illuminated indicator, lightbox and encoder, in accordance with an embodiment of the present invention;
FIG. 4 is a top view looking into the lightbox as in FIGs. 2 and 3, showing a light block, light ramp and light dividing ridge, in accordance with an embodiment of the present invention;
FIG. 5A is a top view of the illuminated indicator pad as in FIGs. 2 and 3, in accordance with an embodiment of the present invention;
FIG. 5B is a perspective view of the illuminated indicator pad as in FIGs. 2 and 3, in accordance with an embodiment of the present invention; and
FIG. 6 is a perspective view of a lightbox and encoder integrated as a part of a switchpad, in accordance with an embodiment of the present invention.

### DESCRIPTION OF THE PREFERRED EMBODIMENTS

Exemplary embodiments are described with reference to specific configurations. Those of ordinary skill in the art will appreciate that various changes and modifications can be made while remaining within the scope of the appended claims. Additionally, well-known elements, devices, components, methods, process steps and the like may not be set forth in detail in order to avoid obscuring the invention. Further, unless indicated to the contrary, any numerical values set forth in the following specification and claims are approximations that may vary depending upon the desired characteristics sought to be obtained by the present invention.

A system and method is described herein for illuminating an indicator. The present invention provides improved visual appearance of a lighted indicator, which can be especially appreciated when artificial lighting is apparent in dark environments and at night. Light is uniformly distributed to an indicator using a minimum number of components. Light leaks, shadows, internal reflections, color bleeds, and other undesirable visual effects are avoided.

The present invention is useful to illuminated indicators that are utilized for a variety of systems ranging from electronic systems, appliances, and system controls visible to an operator of a motor vehicle to decorative graphics. The indicators may be formed with varied shapes including a lighted ring, or straight bar. Systems having decorative graphics may utilize the present invention as well.

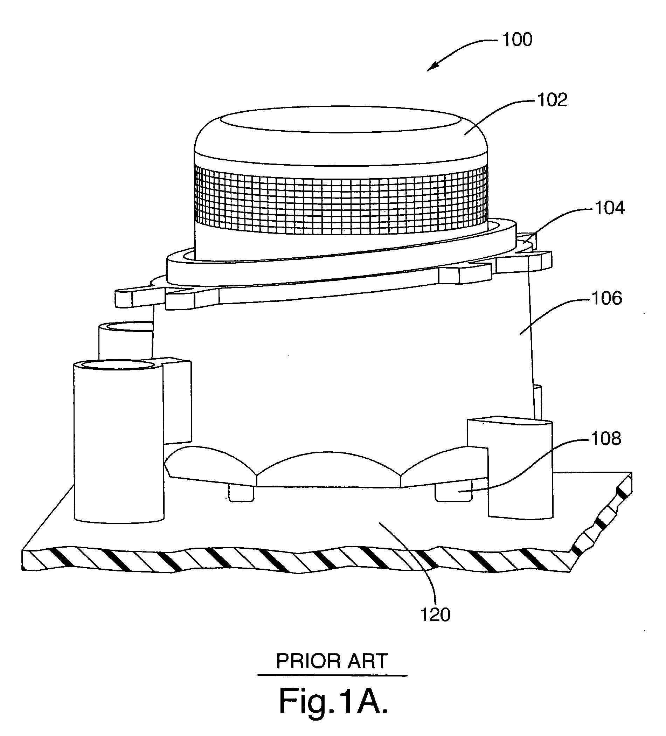

Referring to the drawings wherein identical reference numerals denote the same elements throughout the various views, **FIG. 1A** illustrates a perspective view of a contemporary device 100 including an illuminated indicator 104, lightpipe 106 and a control encoder knob 102. Lightpipe 106 is attached to a circuit board 120. Light is generated by a light emitting diode 108 and reflected through the material of the lightpipe 106 to be received by indicator 104. This conventional design utilizes a halo ring shaped indicator 104. The fit of the halo ring indicator 104 to the lightpipe 106 is critical and must be exact or light intended to be transmitted to the halo ring indicator 104 is lost and visible internal reflections and light leaks occur. Moreover, a number of individual components are utilized such that gaps are difficult to control and are therefore created between the components. These gaps cause unwanted visual effects including shadows and light leaks, especially between the halo ring indicator 104 and control knob 102, which are visible to a vehicle operator.

Additionally, during production the inner walls of the lightpipe 106 are painted white and then black in order to achieve a reflection and reduce light leaks. Still, the lightpipe 106 and the halo ring indicator 104 usually experience unwanted visual effects including light leaks, reflections, black rings, uneven and dim lighting. Color bleeds and mixing are also present between separate colored sections of the halo ring indicator 104.

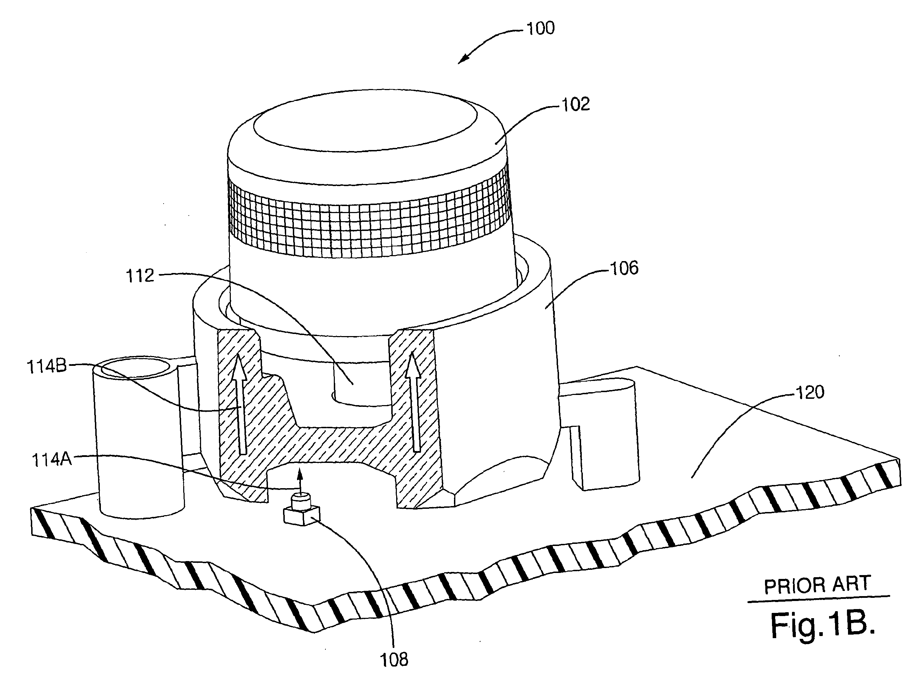

**FIG. 1B** is another perspective view of the lightpipe 106 and control encoder knob 102 as in FIG. 1A further showing a sectional view of the lightpipe 106 with the absence of the halo ring indicator 104. As illustrated by arrows 114A and 114B, light is transmitted from light emitting diode 108 positioned on a circuit board 120, through the lightpipe 106. This contemporary design is plagued with undesirable visual effects including uneven lighting, shadows, reflections, light leaks and bleeding indicator colors.

The control encoder 112 is centered using a faceplate (not shown). However, the faceplate centering feature creates a shadow in the halo ring indicator 104. Further, the centering of the control encoder 112 is dependent on the tolerances of the halo ring indicator 104, lightpipe 106 and faceplate, which increases centering error.

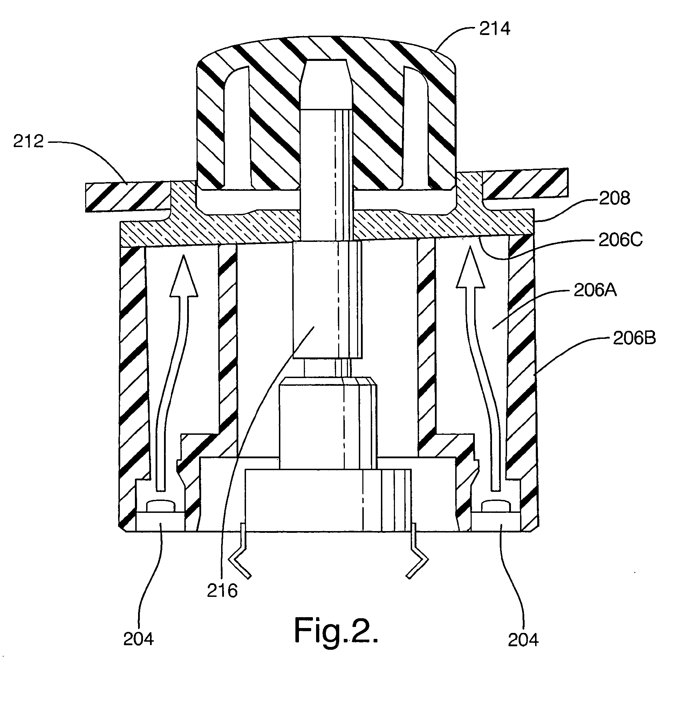

**FIG. 2** is a sectional side view illustrating an illuminated indicator 208, lightbox 206B and encoder 216, in accordance with an embodiment of the present invention. Lightbox 206B is a component that is formed with a cavity 206A for containing light emitted from light source 204. Light source 204 is at least partially situated within the lightbox 206A. In another embodiment, light source 204 transmits light to lightbox 206A without being situated within lightbox 206A. Various types of light sources can be used including a light emitting diode and an incandescent lamp. Also, although two light sources are shown, other numbers of light sources can be employed. Light source 204 can be positioned in various locations within lightbox 206A to achieve a desired lighting appearance.

Lightbox 206B is also formed with an outlet 206C for transmitting the light to indicator 208. The lightbox outlet 206C can be formed as an opening or as translucent material provided that the light can be effectively transmitted therethrough to the indicator 208. Indicator 208 is positioned and shaped with a base adjacent to the lightbox outlet 206C. The base of indicator 208 receives light from the cavity of lightbox 206A. The area of the base of indicator 208 is maximized to create a large pad printing area and therefore maximize lighting efficiency and avoid light leaks. Indicator is substantially translucent to receive and pass light therethrough. The present invention also allows an inexact fit, and therefore a greater fit tolerance, between indicator 208 and lightbox 206B. In an embodiment, indicator 208 is shaped in the form of a halo ring. It is to be appreciated that indicator 208 can be formed in numerous shapes including a half moon shape and a straight bar. The indicator may also be continuous bar or a dashed/intermittent bar.

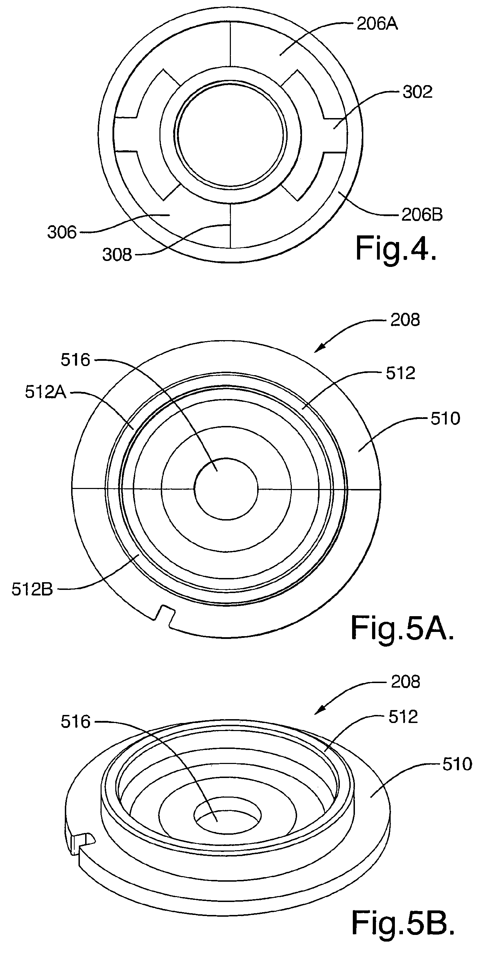

Indicator 208 displays a system setting, while encoder 216 varies the system setting. In another embodiment, indicator 208 illuminates an area adjacent to a system setting. The system can be a variety of types including a motor vehicle system, and the system setting may affect a motor vehicle temperature setting, fan setting or radio setting. Indicator 208 defines an opening 516 (FIG. 5A) to align the positioning of encoder 216. A control knob 214 is affixed to the encoder 216 to facilitate grasping the encoder 216. Since the indicator 208 positions the encoder 216, the control knob 214 can be fitted accurately and therefore closely to indicator 208. Thus, a tight tolerance is formed between indicator 208 and control knob 214. In addition to avoiding leaks and shadows by minimizing gaps, typical secondary operations and components needed to block light leaks, bright spots, and internal reflections are eliminated. Optionally, a faceplate 212 may be positioned in part between indicator 208 and control knob 214.

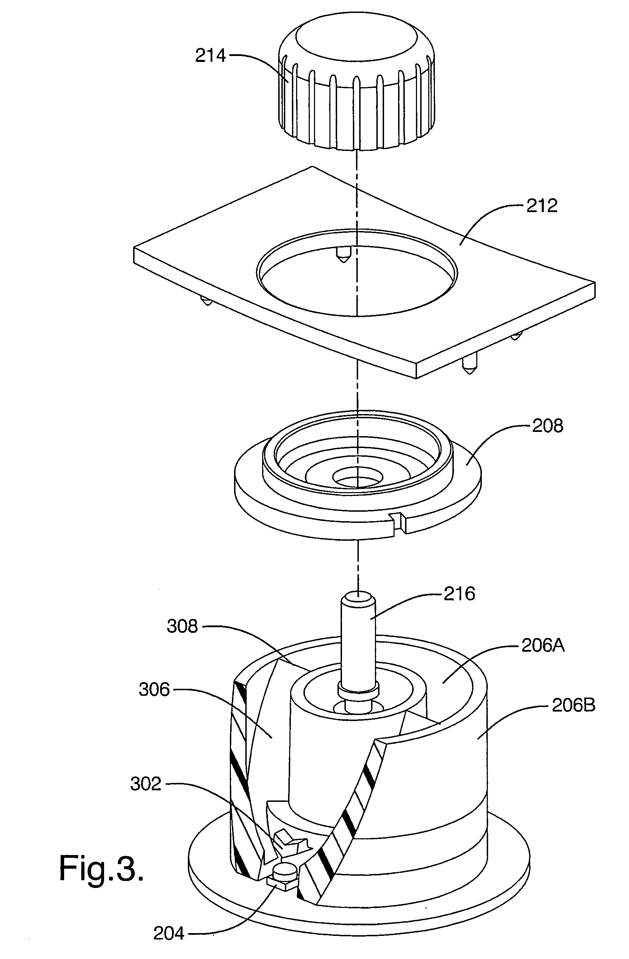

Referring to **FIG. 3**, an exploded perspective view is illustrated of an illuminated indicator 208, lightbox 206B and encoder 216, in accordance with an embodiment of the present invention. In an embodiment, lightbox 206B further includes a ramp 306, a light block (described in FIG. 4) and a light dividing ridge 308. Ramp 306 uniformly dispenses light to the indicator. Ramp 306 substantially extends at an angle from a first end of the lightbox cavity 206A adjacent to the light source 204 to a second end of the lightbox cavity 206A adjacent to the indicator 208. Light source 204 is positioned to provide maximized light to ramp 306 and ultimately to indicator 208. The number of ramps employed can depend on the number of light sources employed and the number of separate sections of indicator 208. In an embodiment, indicator 208 is formed with separate sections. Light dividing ridge 308, being formed with a sharp ridge, separates the light dispensed to separate sections of the indicator 208. Light dividing ridge 308 is formed at an end of ramp 306 and adjacent to indicator 208 and the second end of the lightbox cavity 206A. Additionally, when indicator 208 presents a dashed/intermittent bar, light dividing ridge 308 can be utilized to separate light dispensed to separate dashed sections.

**FIG. 4** shows a top view looking into the lightbox as in FIGs. 2 and 3, showing a light block 302, light ramp 306 and light dividing ridge 308, in accordance with an embodiment of the present invention. Light block 302 is positioned at an end of the lightbox cavity 206A adjacent to the light source 204. Light block 302 evenly directs light to indicator 208 by focusing the light along ramp 306 and away from the center of light box 206B. Light block aids in dispersing light throughout lightbox cavity 206A such that light is uniformly directed to indicator 208, and additionally blocks bright spots from developing on indicator 208.

**FIG. 5A** illustrates a top view of the illuminated indicator 208 as in FIGs. 2 and 3, in accordance with an embodiment of the present invention. Indicator base 510 receives light from the cavity of lightbox 206A. Indicator 208 is substantially translucent to receive and pass light therethrough. Indicator 208 can be formed of a wide variety of materials including a transparent plastic, acrylic or polycarbonate. In an embodiment, indicator 208 is formed without colors. In another embodiment, indicator 208 is pad printed with sectioned colors and presents a sectioned color display. The separate colored sections of indicator 208 are shown as sections 512A and 512B. A particular sectioned color of the color display represents a system setting. The system can be a variety of types including electronic systems, appliances, and a motor vehicle system. In the case of a motor vehicle system, the system setting may affect a motor vehicle temperature setting, fan setting or radio setting. As described above, encoder 216 varies a system setting. Indicator 208 defines an opening 516 to align the positioning of encoder 216.

In contemporary designs, when an indicator includes colors, color mixing often occurs creating undesirable lighting. In the present invention, the light dividing ridge 308 separates light dispensed to separate colored sections 512A and 512B of indicator 208. In an embodiment, the light dividing ridge 308 having a sharply defined ridge can separate sharply separate colored sections 512A and 512B of indicator 208 as well.

**FIG. 5B** is a perspective view of the illuminated indicator 208 as in FIGs. 2 and 3, in accordance with an embodiment of the present invention. It is to be appreciated that indicator base 510 can incorporate a variety of colored options. Appliqués or translucent painted plastic with laser etch or printed graphics can be utilized as well. In an embodiment, indicator base 510 is pad printed blue in one section and red in a separate section (i.e., sections 512A and 512B). A white color pad printing that is not visible is subsequently performed to obtain color consistency and evenness. The pad printed blue and red simulate a colored ring 512 around the control knob 214. Ring 512 extends out perpendicularly from base 510 and can be positioned adjacent to and between faceplate 212 and control knob 214.

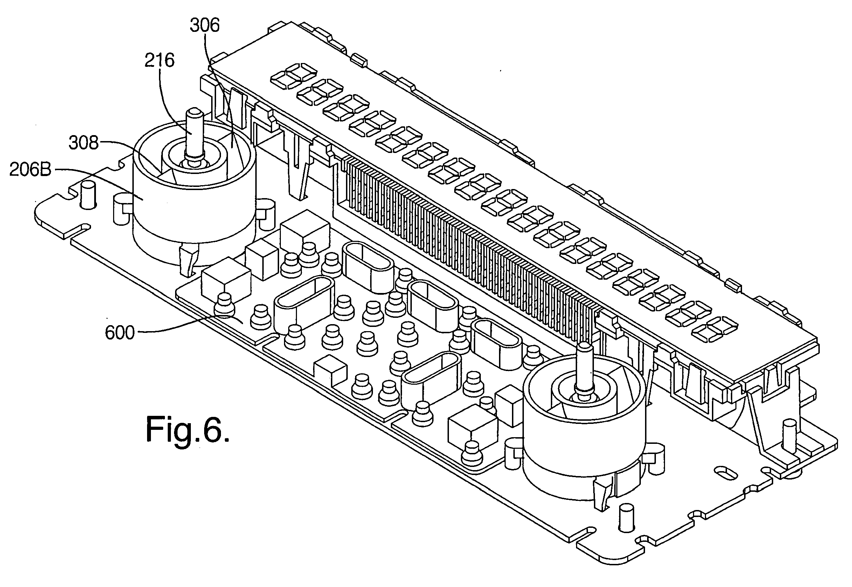

Referring to **FIG. 6,** a perspective view is shown of a lightbox 206B and encoder 216 integrated as a part of a switchpad 600, in accordance with an embodiment of the present invention. In a standard design, when utilized for a motor vehicle system, the switchpad 600 is a rubber molded silicon based component affixed to a circuit board. Production and assembly costs are reduced as compared to conventional devices since component part numbers are reduced and the lightbox 206B may be integrated with standard system components.

Other features and advantages of this invention will be apparent to a person of skill in the art who studies this disclosure. Thus, exemplary embodiments, modifications and variations may be made to the disclosed embodiments while remaining within the spirit and scope of the invention as defined by the appended claims.

## Claims

1. A system for illumination comprising:
a lightbox (206B) defining a cavity (206A) for containing light emitted from a light source (204) and further defining an outlet (206C) for transmitting the light from the cavity (206A);
an indicator (208), positioned adjacent to the lightbox outlet (206C), for receiving light from the lightbox (206B) and passing the light therethrough; and
an encoder (216) situated adjacent to the indicator (208), the encoder (216) for varying a system setting.

2. The system as in claim 1, wherein the lightbox (206B) further comprises at least one of:
a ramp (306) for uniformly dispensing the light to the indicator (208), wherein the ramp (306) substantially extends at an angle from a first end of the lightbox cavity (206A) adjacent to the light source (204) to a second end of the lightbox cavity (206A) adjacent to the indicator (208);
a light dividing ridge (308) for separating the light dispensed to separate sections of the indicator (208), wherein the indicator (208) is formed with separate sections (512A, 512B), and wherein the light dividing ridge (308) is positioned adjacent to the indicator (208) and the second end of the lightbox cavity (206A); and
a light block (302) for dispersing the light throughout the lightbox cavity (206A) and uniformly directing the light to the indicator (208), wherein the light block (302) is positioned adjacent to the light source (204) and the first end of the lightbox cavity (206A), and wherein the light source (204) is at least partially situated within the lightbox (206B).

3. The system as in claim 1, wherein the indicator (208) defines an opening (516) to align the positioning of the encoder (216).

4. The system as in claim 1, wherein the indicator (208) is shaped with a base (510) adjacent to the lightbox (206B) and the area of the base (510) is maximized.

5. The system as in claim 1, wherein the indicator (208) is substantially translucent to receive and pass the light therethrough, wherein the indicator (208) is shaped in the form of one of a halo ring and a straight bar, and wherein the indicator (208) is one of a continuous form and an intermittent form.

6. The system as in claim 1, wherein the indicator (208) includes a sectioned color display (512A, 512B), and wherein a color of the sectioned color display (512A, 512B) represents the system setting.

7. The system as in claim 1, wherein the lightbox (206B) is integrated as a part of a switchpad (600).

8. The system as in claim 1, wherein the light source (204) is a light emitting diode.

9. The system as in claim 1, wherein the system setting affects a motor vehicle function setting including one of a temperature setting, fan setting, and radio setting.

10. An apparatus for illuminating a motor vehicle system setting, the system setting being adjustable by an operator of the motor vehicle, comprising:
a lightbox (206B) defining a cavity (206A) for containing light emitted from a light source (204) and further defining an outlet (206C) for transmitting the light from the cavity (206A);
an indicator (208), positioned adjacent to the lightbox outlet (206C), for receiving light from the lightbox (206B) and passing the light therethrough; and
an encoder (216) situated adjacent to the indicator (208), the encoder (216) for varying the system setting.

11. The apparatus as in claim 10, wherein the lightbox (206B) further comprises at least one of:
a ramp (306) for uniformly dispensing the light to the indicator (208), wherein the ramp (306) substantially extends at an angle from a first end of the lightbox cavity (206A) adjacent to the light source (204) to a second end of the lightbox cavity (206A) adjacent to the indicator (208);
a light dividing ridge (308) for separating the light dispensed to separate sections of the indicator (208), wherein the indicator (208) is formed with separate sections (512A, 512B), and wherein the light dividing ridge (308) is positioned adjacent to the indicator (208) and the second end of the lightbox cavity (206A); and
a light block (302) for dispersing the light throughout the lightbox cavity (206A) and uniformly directing the light to the indicator (208), wherein the light block (302) is positioned adjacent to the light source (204) and the first end of the lightbox cavity (206A), and wherein the light source (204) is at least partially situated within the lightbox (206B).

12. The apparatus as in claim 10, wherein the indicator (208) defines an opening (516) to align the positioning of the encoder (216).

13. The apparatus as in claim 10, wherein the indicator (208) is shaped with a base (510) adjacent to the lightbox (206B) and the area of the base (510) is maximized, wherein the indicator (208) is shaped in the form of one of a halo ring and a straight bar, and wherein the indicator (208) is one of a continuous form and an intermittent form.

14. The apparatus as in claim 10, wherein the indicator (208) includes a sectioned color display (512A, 512B), and wherein a color of the sectioned color display (512A, 512B) represents the system setting.

15. The apparatus as in claim 10, wherein the lightbox (206B) is integrated as a part of a switchpad (600).

16. A method for illumination comprising:
containing light, emitted from a light source (204), within a cavity (206A) defined by a lightbox (206B);
transmitting the light from the lightbox cavity (206A) through an outlet (206C) defined by the lightbox (206B) to an indicator (208);
positioning the indicator (208) adjacent to the lightbox outlet (206C), wherein the indicator (208) is substantially translucent to receive and pass the light therethrough; and
positioning an encoder (216) adjacent to the indicator (208), the encoder (216) for varying a system setting.

17. The method as in claim 16, further comprising forming within the lightbox (206B) at least one of:
a ramp (306) for uniformly dispensing the light to the indicator (208), wherein the ramp (306) substantially extends at an angle from a first end of the lightbox cavity (206A) adjacent to the light source (204) to a second end of the lightbox cavity (206A) adjacent to the indicator (208);
a light dividing ridge (308) for separating the light dispensed to separate sections of the indicator, wherein the indicator (208) is formed with separate sections (512A, 512B), and wherein the light dividing ridge (308) is positioned adjacent to the indicator (208) and the second end of the lightbox cavity (206A); and
a light block (302) for dispersing the light throughout the lightbox cavity (206A) and uniformly directing the light to the indicator (208), wherein the light block (302) is positioned adjacent to the light source (204) and the first end of the lightbox cavity (206A), and wherein the light source (204) is at least partially situated within the lightbox (206B).

18. The method as in claim 16, further comprising:
defining an opening (516) with the indicator (208) wherein the indicator opening (516) aligns the positioning of the encoder (216);
positioning a base (510) of the indicator (208) adjacent to the lightbox (206B);
maximizing the area of the indicator base (510); and
shaping the indicator (208) in the form of one of a halo ring and a straight bar.

19. The method as in claim 16, further comprising forming the indicator (208) as a sectioned color display (512A, 512B), wherein a color of the sectioned color display (512A, 512B) represents the system setting.

20. The method as in claim 16, further comprising integrating the lightbox (206B) as a part of a switchpad (600).
